# EUROPEAN PATENT SPECIFICATION

(11) **EP 1 809 493 B1**
(45) Date of publication and mention of the grant of the patent: **03.02.2010**
(21) Application number: 05793985.2
(22) Date of filing: 19.10.2005
(51) Int. Cl.: B60F 3/00

(54) **AMPHIBIOUS VEHICLES WITH RETRACTABLE WHEELS**
AMPHIBIENFAHRZEUGE MIT EINZIEHBAREN RÄDERN
VEHICULES AMPHIBIES A ROUES RETRACTABLES

(30) Priority: 22.10.2004 GB 0423470
(43) Date of publication of application: 25.07.2007
(73) Proprietor: Gibbs Technologies Ltd., Warwickshire CV11 4LY (GB)
(72) Inventor: LONGHILL, Simon James, Mt Wellington, Auckland 1006 (NZ); BRIGGS, Stephen John, Mt Wellington, Auckland 1006 (NZ); JEFFREY, Glen Michael, Mt Wellington, Auckland 1006 (NZ); WEEKERS, Hans, Mt Wellington, Auckland 1006 (NZ)
(74) Representative: Pluckrose, Anthony William
(86) International application number: PCT/GB2005/003999
(87) International publication number: WO 2006/043043

(56) References cited:
- WO-A-2004/103743
- GB-A- 2 397 555
- US-A- 2 781 529
- US-A- 4 958 584
- US-A- 5 531 179
- US-A- 5 690 046
- US-B2- 6 394 017
- PATENT ABSTRACTS OF JAPAN vol. 017, no. 208 (M-1401), 23 April 1993 (1993-04-23) -& JP 04 349009 A (ISUZU MOTORS LTD), 3 December 1992 (1992-12-03) cited in the application

## Description

The present invention relates to amphibious vehicles, and particularly to hull fairings for recesses in the hull.

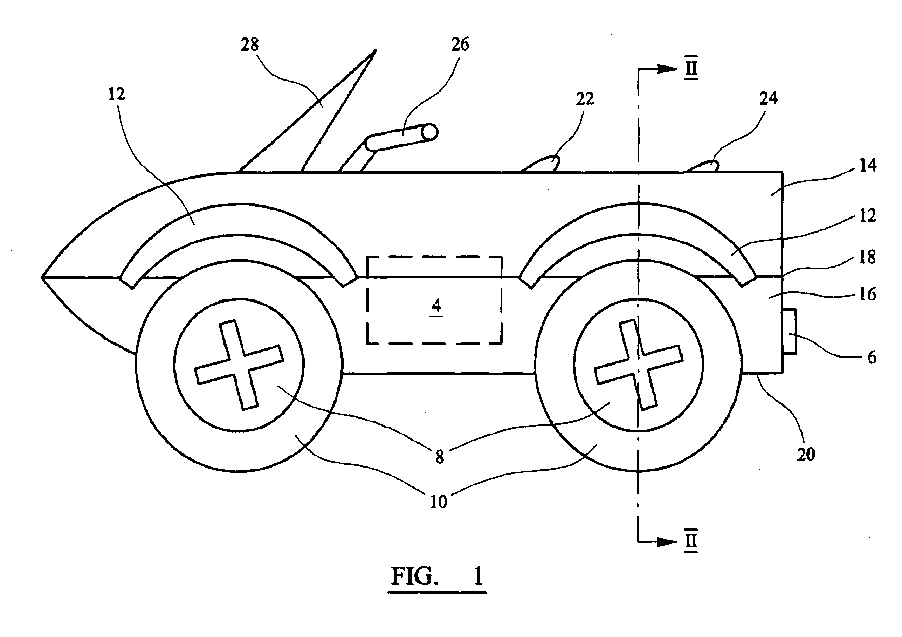

In our co-pending Patent Application No. PCT/GB/04/002156, a planing amphibious vehicle hull is shown with recesses in the areas where retractable wheels and their suspensions move during suspension retraction and protraction. Because the suspensions are assembled from below during manufacture, the recesses intrude considerably into the planing surfaces of the hull. In order to reduce this intrusion, plates are fixed across part of each recess after assembly of the suspension. These plates are currently glued into position, although they could be bolted. As will be seen from Figure 1 of the above prior application, it is clear that particularly the front wheel recesses are very much open at the bottom. As a result of the openings in the bottom of the hull, there can be problems with drag on the hull when the vehicle tramps through rough water. This is particularly problematic for vehicles smaller and lighter than that shown in the prior application.

A further known solution to this problem of reducing drag on water is disclosed in US 4,958,584, to Williamson. In this patent, a single sliding cover 18 (Figure 5) for front and back wheel wells 42 on one side of the vehicle is powered fore and aft by a double acting hydraulic cylinder 148. This arrangement appears to be a very simple and elegant solution, but has considerable practical drawbacks.

First, the slide channels will be susceptible to damage or seizure due to ingress of sand or silt. Second, the cover runs parallel to the hull for most of its length; so any grounding or collision damage which distorts either the hull or the cover would be liable to cause the two parts to jam together, preventing protraction of the wheels and stranding the vehicle on water.

Third, the use of a single actuator to move such a large and complex sliding panel is liable to lead at the least to uneven panel movement, and at the most to complete seizure, especially as wear and play build up as the vehicle ages. Finally, a single cover as shown, which overlaps the hull between front and rear arches even when closed, would project below the hull at the front, at least, of each wheel arch, disturbing the smooth flow of water along the vehicle's planing surface. Clearly, fresh thinking is needed.

Several other proposals have been published to cover a retractable wheel on marine craft or amphibians. In US 2,781,529 (Moody), a boat is shown with a pair of retractable wheels which when protracted enable the boat to be towed as a trailer on land. Each wheel has a suspension pivotal about a transverse axis and is retractable through an interruption in the bottom. Each interruption is arranged to be covered by a pair of covers hinged about a longitudinal axis. To retract the wheels, a lever attached to the suspension is moved forward. Attached to the lever are cables which pull the covers shut. The adjustment of the cables relative to the lever and covers is clearly critical since if too short the covers will tend to jam on the suspension and if too long the covers will not close properly. To avoid jamming the tendency will be for the cables to be set too long and this may be extended as the cables stretch and slacken off. The result will be an imprecise closure of the interruption and a tendency when in the water for the covers to flutter. This would slow the boat and could be noisy.

JP 4,349,009 A (Inoue Nobuaki - Isuzu) describes and shows a cover arrangement for an amphibious retractable wheel. The wheel cover hinges about a longitudinal axis. Again a cable arrangement is used to pull the cover shut but by some undisclosed means. Torsion bars are used to open the cover. Therefore considerable force will be needed to shut the covers and this will tend to stretch the cover closing cables. Again the problem of imperfect closure and hence cover flutter will probably occur.

A more direct cover closure arrangement is incompletely shown in US 5,690,046 (Grzech) where a longitudinally hinged cover is linked in an undisclosed way by a pair of links to a retractable wheel suspension member which pivots about a transverse axis. Again the problem of Moody's arrangement occurs where the covers when closing must be carefully arranged not to jam against the wheel as it is pulled into its housing. Yet again the indirect connection between cover and suspension is likely to cause imperfect cover closure. A further problem is that the relative movement enabled by what could be the linkage between cover and wheel is limited so that the cover when open extends well below the wheel axle and therefore the cover could hit the ground and become deformed or even be torn off. The failure in Grzech's patent to disclose how his linkage worked may indicate that it was not reduced to practice.

US 6394017 (Pavon) discloses a craft which can be towed by a vehicle when on land and so is provided with two wheels capable of being extended from their housing in the hull into a running position to facilitate towing. However, to return the wheels into the housing, the suspension must first be disconnected and then articulated, and a trap door integral with a lever arm is urged to come to a stop on a boss to close.the housing opening, requiring the wheel to be fully enclosed within the housing.

An object of the invention is, therefore, to further reduce drag on an amphibious vehicle when in water and address the above limitations of the prior art.

According to the invention, there is provided an amphibious vehicle having retractable road wheels each mounted by means of a wheel suspension to a vehicle body, the body having a planing bottom, wherein the bottom has for each suspension an interruption in the bottom through which at least a part of the suspension can move during retraction or protraction of its said road wheel, wherein the interruption is arranged to be substantially covered by a cover bracketed or connected to the part of the wheel suspension, the cover so arranged that the cover at least partially opens on wheel protraction and wherein the said road wheel is outboard of the cover when protracted and when retracted.

The fixture of the cover to the suspension ensures that its cover pivots about the pivotal axis of the suspension so that the wheel cannot jam on the cover. Preferably, the cover and suspension pivot about a longitudinal axis of the vehicle. The longitudinal axis is in the fore and aft direction.

Preferably, the road wheels are arranged to be raised from a first position where they are road usable to a second position where they are above the water-line of the vehicle.

The arrangement whereby only the at least part of the suspension retracts through the interruption in the bottom of the vehicle whilst leaving the road wheels mainly or completely outside the vehicle reduces the size of the interruption. This also avoids any problem of road wheels and covers jamming. It also ensures a minimum intrusion into the bottom of the vehicle by parts of the vehicle used in road mode.

Preferably the part of the suspension which is retractable into the bottom of the vehicle is a lower suspension member which extends at least mainly in a transverse direction of the vehicle. This limits the longitudinal dimension of the interruption and hence reduces any tendency of the cover to flutter.

Limitation of cover size and extent of the interruption makes it possible to provide an indirect connection between the suspension and cover so that the cover or covers can be hinged to the vehicle body about a different axis or different axes to an axis about which the road wheel is retractable.

In a preferred arrangement, the cover is connected to a lower suspension member, so that when protracting the wheels, the lower suspension member carries the cover down with it. The bracketed connection between the suspension member and cover may be slightly extensible but the extensibility is only against a strong spring, so that when retracting the wheels, the suspension member may retract into the interruption in the hull; while the cover is constrained to remain flush with the hull surface. Flutter is reduced in this arrangement.

The cover(s) may be hollow bodies, which provide buoyancy to the vehicle on water. In this case, the cover(s) may be made of blow moulded plastic. Alternatively, they may have buoyancy foam attached. The cover(s) may also be profiled to match the hull planing surface, with features like strakes continued across the cover surfaces. The cover(s) may have drains so that on protraction water collected by the cover(s) can drain off. This is applicable to a shaped cover.

Embodiments of the invention will now be described by way of example with reference to the accompanying drawings in which:-
Figure 1 is a diagrammatic side elevation view of an amphibious vehicle according to the invention;
Figure 2 is a transverse cross section through plane II-II of the vehicle of Figure 1 according to a first embodiment of the invention, with the wheels retracted;
Figure 3 is a transverse cross section through plane II-II of the vehicle of Figure 1 according to a first embodiment of the invention, with the wheels protracted;
Figure 4 is a view from below the vehicle of Figure 1 with the wheels retracted;
Figure 5 is a transverse cross section through plane II-II of the vehicle of Figure 1 according to a second embodiment of the invention, with the wheels retracted;
Figure 6 is a view from below the vehicle of Figure 5 with the wheels retracted; and
Figure 7 is a transverse cross section through plane II-II of the vehicle of Figure 1 according to a third embodiment of the invention, also with the wheels retracted.

Amphibious vehicle 2 has a prime mover 4 driving a pump jet 6 through a marine transmission. Locomotion on road is provided by wheels 8, which are driven through a road transmission. The wheels are shielded by wheel arches 12. The vehicle body comprises an upper body 14 and a hull 16, which are formed separately and joined at split line 18. A chassis is also provided, as is described below. If this chassis is bonded to the bodywork, it may be regarded as part of the overall body structure. The hull has a planing surface 20. A driver's seat 22 is provided with one or more passenger seats 24 astern of the driver's seat. The seating axis is on the longitudinal axis of the vehicle, or parallel thereto. The axis of the prime mover is also along, or parallel to, the longitudinal axis of the vehicle. Driver controls are provided, in this case handlebars 26. A windscreen 28 is provided for weather and spray protection.

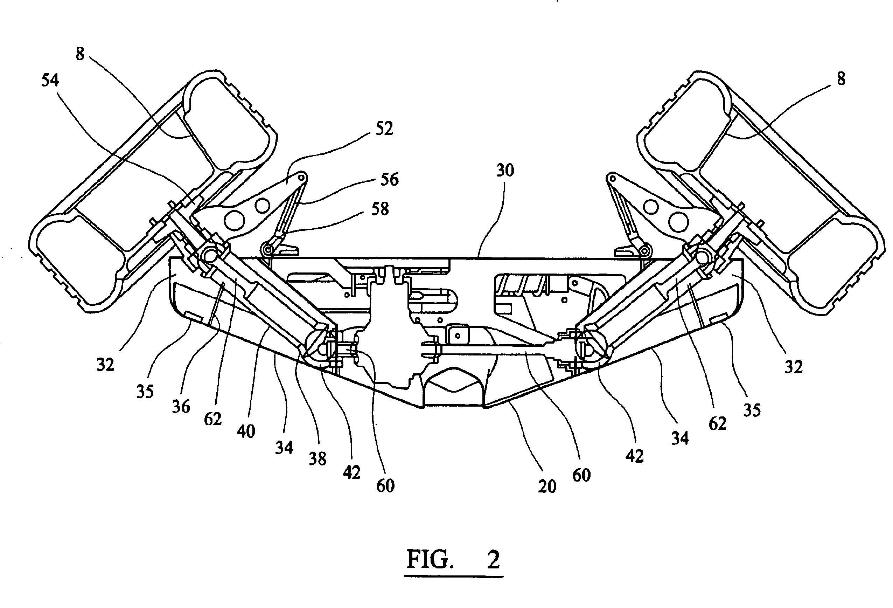

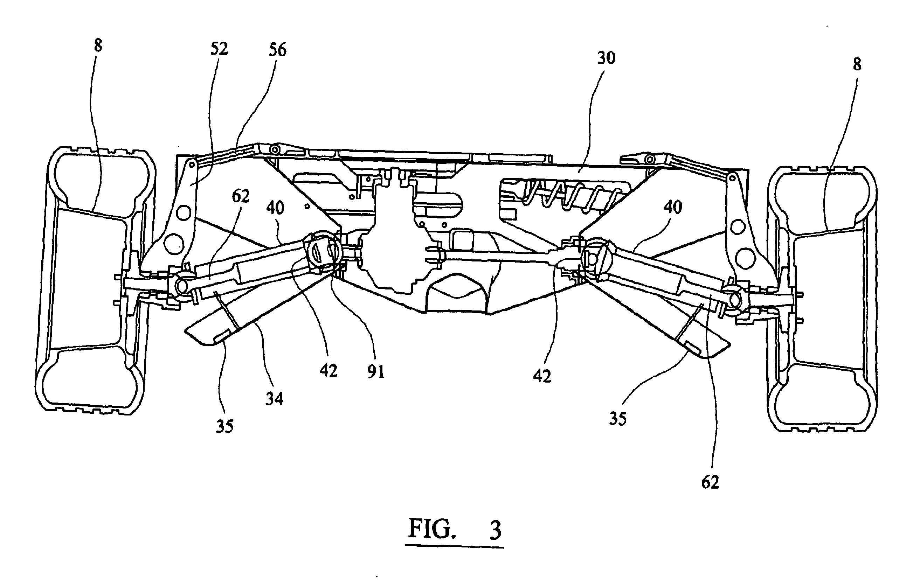

Figures 2 and 3 show a pair of rear wheels 8 mounted on hubs 54. The hubs are driven by intermediate shafts 62 and layshafts 60, which are driven from the prime mover 4. The intermediate shafts are supported inside lower suspension members 40 respectively which are each in the form of a tube. The tubelike members 40 are pivotally mounted at their inner ends on bearings 42. The outer ends of members 40 are connected to upright members 52, which carry hubs 54. Upper suspension members 56 connect between vehicle chassis 30 and upright members 52.

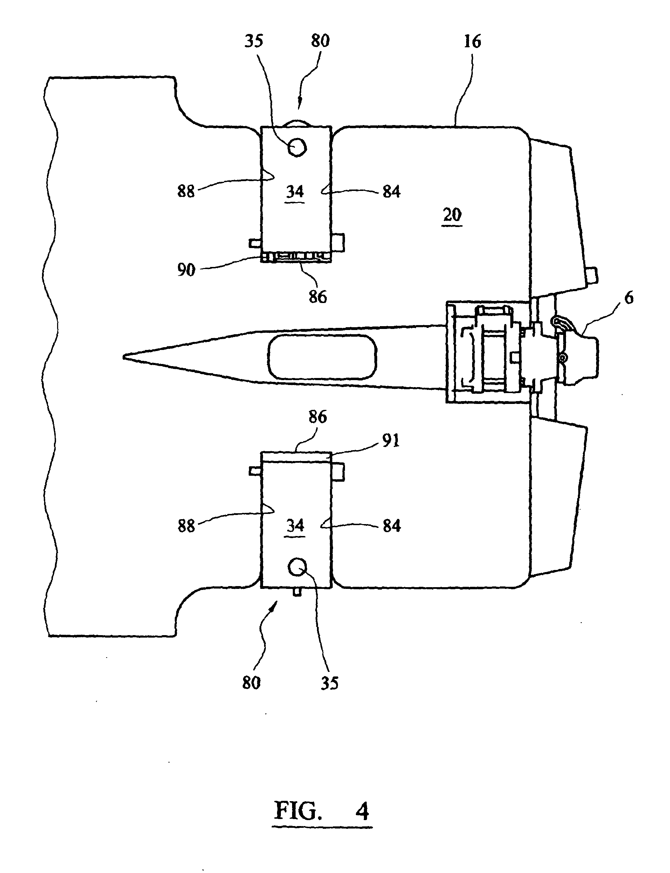

As can be seen in Figure 4, hull 16 has a planing bottom 20, in which there are gaps 80 forming interruptions in the bottom through which lower suspension members 40 can move, from a retracted position of the wheels as shown in figure 2, to a protracted or wheels down position as shown in Figure 3.

Fixed to lower suspension members 40 are covers 34, which are fixed by means of inner and outer brackets 36 and 38 (Figure 2) to members 40, so that the covers pivot about bearings 42. Gaps 80 are defined by body edges 84, 86, and 88. Covers 34 when closed substantially fill gaps 80, only leaving small clearance gaps 90 necessitated by the need to distance the outer faces of the covers from the centres of bearings 42. One way drains 35 are provided in the covers. The gaps 90 may be eliminated by the provision of flexible material. The brackets 36 and 38 may be made slightly extendable against a strong spring to allow for driftwood or other flotsam catching between one of the covers and the bottom. The spring should be strong enough to prevent flutter.

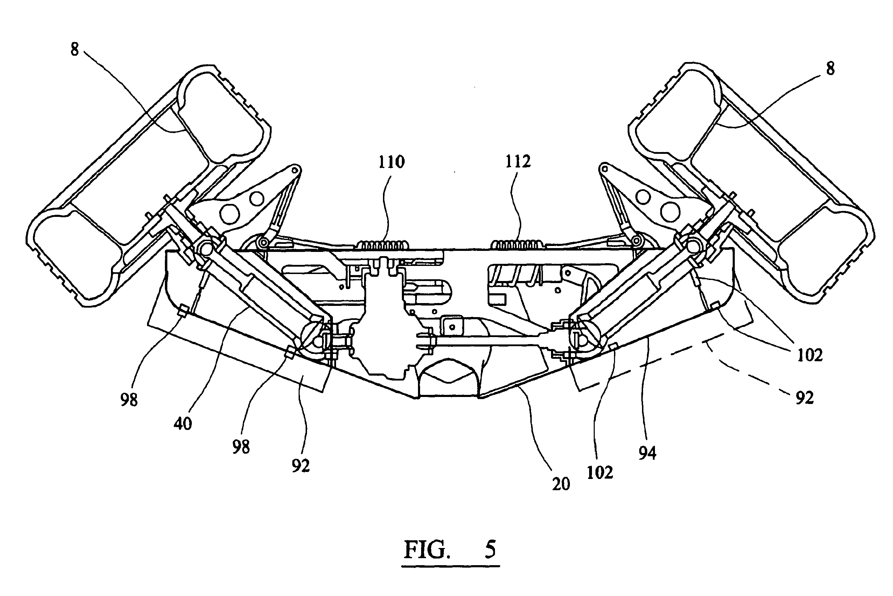

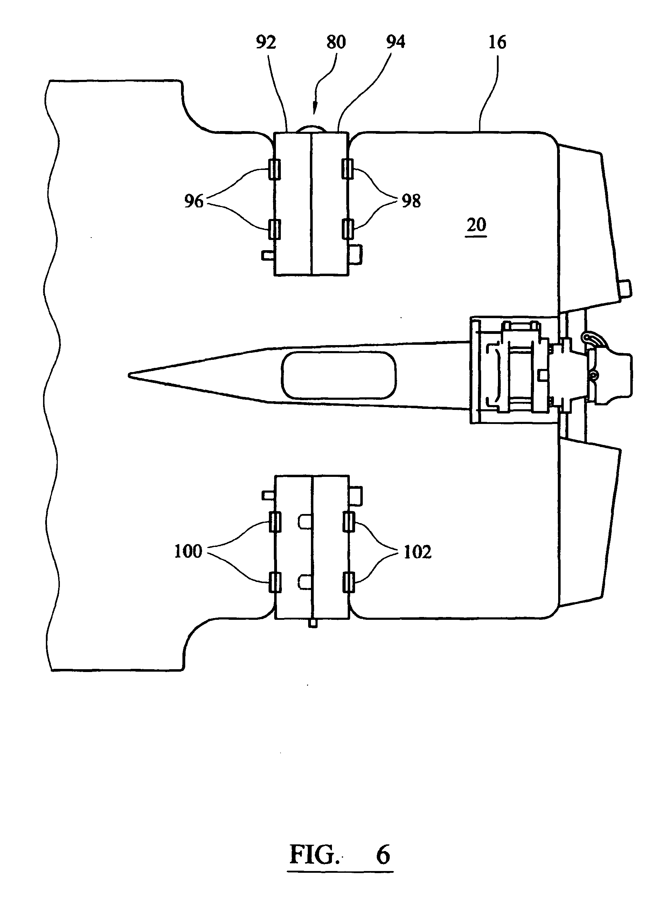

In order to achieve complete filling of clearance gaps 90, a second proposal has a pair of covers 92 and 94 for each interruption in the hull surface, which are hinged at 96 and 98 on one side and at 100 and 102 on the other side of the planing surface 20. This is shown in Figures 5 and 6. Cover 92 is shown figuratively in an open position here, although the suspension is retracted; on the right hand side of the Figure, a dashed outline of the corresponding cover is shown.

Each cover 92, 94 of each pair hinges about a transverse axis of the vehicle so as to fill half of each gap 80. The covers are split into pairs in "barn door" style to reduce downward protrusion below the hull surface 20 when the covers are open. The covers may be made flexible to avoid breakage on striking rocks, etc. They may also protect the wheel suspensions from impact damage, e.g. scratching of anti-corrosive coatings. The simplest and most foolproof means of opening these covers is to arrange for them to be held shut by springs 110 and 112 (Figure 5) when wheels are retracted, and pushed open by the suspension as the wheels protract. Alternatively, mechanical linkages to the wheel suspensions may be arranged. Such linkages could be designed to impart a translating movement to the covers, so that they move transversely across the vehicle before or during deployment.

It may be found that the travel of hull gap covers attached to suspension members is preferred to be less than that of the retractable suspension. Particularly where a narrow hull is combined with a large vee angle, as seen in the Figures, it will be necessary for the wheels to be tipped up at a large angle to the road position to keep them above the water line when cornering on water. In this case, if the covers are constrained to move through the same angles as the lower suspension members, covers which are flush with the hull when the wheels are retracted may hit the ground when the wheels are protracted; conversely, covers which as shown in figure 3, clear the ground adequately in road mode, will be drawn up above the hull line when the wheels are retracted.

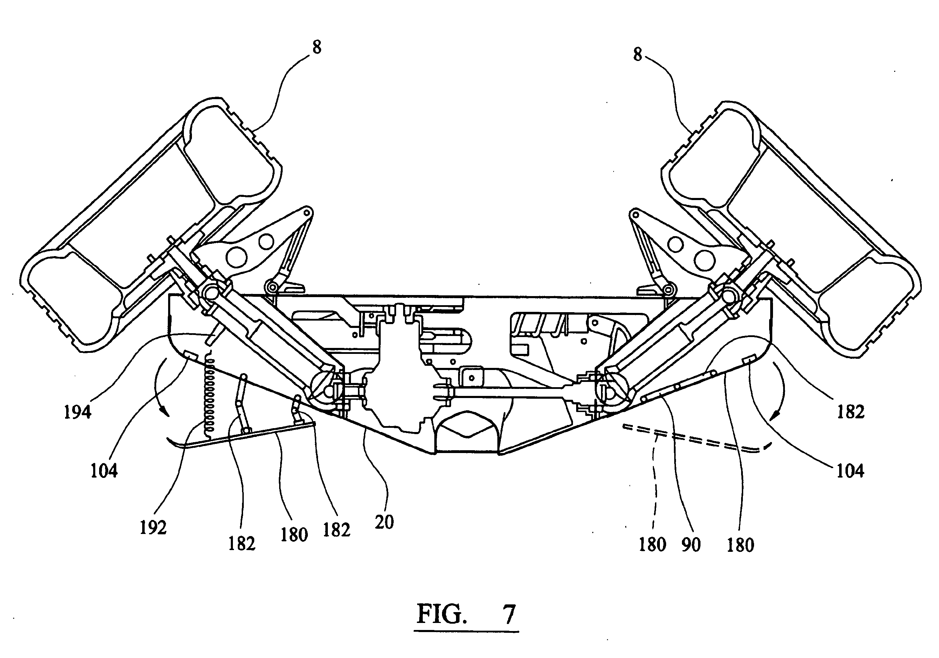

This mechanical contradiction may be averted by breaking the fixed mechanical link between the covers and the suspension members. Figure 7 shows such an arrangement with the wheels retracted. Cover 180 on the right hand side of the Figure (left hand side of the vehicle) is shown retracted, as it would be with the wheels retracted; but cover 180 on the left hand side of the Figure (right hand side of the vehicle) is shown figuratively in a protracted position, to show linkage 182.

When the suspension is protracted, covers 180 are pushed down below planing surface 20 by pins 194 mounted on the lower suspension members. In this position, covers 180 are stabilized by linkages 182. When the suspension is retracted, pins 194 also retract; and covers 180 are pulled up towards surface 20 by tension springs 192, which are tethered above surface 20. The suspension members will be pulled up inside the hull as far as is required to fully retract the wheels; but the covers will be held in place flush against the hull by tabs 104, which are moulded into the hull for this purpose. Alternatively, tabs 104 may be moulded into the covers. Linkages 182 collapse for storage, as shown on the right hand side of the Figure.

It will be appreciated that further modifications to the suspension layout described above may be made as required without departing from the scope of the invention. For example, the covers described may be applied to a nondriven, and/or a steered, axle. Rather than the lower suspension members being tubular, they may be solid, or wishbones.

## Claims

1. An amphibious vehicle (2) having retractable road wheels (8) each mounted by means of a wheel suspension to a vehicle body (14, 16), the body (14, 16) having a planing bottom (20), wherein the bottom (20) has for each suspension an interruption (80) in the bottom (20) through which at least a part of the suspension can move during retraction or protraction of its said road wheel (8), **characterised in that** the interruption (80) is arranged to be substantially covered by a cover (34; 92, 94; 180) bracketed or connected to the part of the wheel suspension, the cover (34; 92, 94; 180) so arranged that the cover (34; 92, 94; 180) at least partially opens on wheel protraction and wherein the said road wheel (8) is outboard of the cover (34; 92, 94; 180) when protracted and when retracted.

2. An amphibious vehicle (2) according to claim 1, where the cover (34; 92, 94; 180) is fixed to the suspension so as to be at least partly rotatable about an axis parallel to the vehicle's longitudinal axis.

3. An amphibious vehicle (2) according to claim 1 or 2 wherein the suspension has an upper (56) and a lower (40) suspension member fixed to the body (14, 16) so as to enable movement of the suspension about an axis parallel to the vehicle's longitudinal axis.

4. An amphibious vehicle (2) according to any of the above claims, where the cover (34; 92, 94; 180) is bracketed to a lower suspension member (40).

5. An amphibious vehicle (2) according to any of the above claims, where the road wheels (8) are arranged to be raised from a first position where they are road usable to a second position where they are above the water-line of the vehicle (2).

6. An amphibious vehicle (2) as claimed in claim 5 where the part of the suspension which is retractable into the bottom (20) of the vehicle (2) is a lower suspension member (40) which extends at least mainly in a transverse direction of the vehicle (2).

7. An amphibious vehicle (2) according to claim 5 or 6, where the fixture of the cover (34; 92, 94; 180) to the body (14, 16) of the vehicle (2) is hinged by means of a hinge or hinges (96, 98, 100, 102), with hinge axes parallel to the vehicle's transverse axis.

8. An amphibious vehicle (2) according to any one of claims 5 to 7, where the cover (34; 92, 94; 180) is movably connected to the body (14, 16) by a linkage (182).

9. An amphibious vehicle (2) according to any one of claims 5 to 8, where the cover (34; 92, 94; 180) is connected to the body (14, 16) by an extensible spring connection (110, 112; 192), and constrained to not pass within the hull (16) by tabs (104) projecting from said cover (34; 92, 94; 180), which abut against the hull (16) as the suspension is retracted.

10. An amphibious vehicle (2) according to any one of claims 1 to 9, where the cover (34; 92, 94; 180) is constrained to be prevented from passing through the interruption (80) into the hull (16) by an overlap of the bottom (20) around the interruption (80) or by an overlap of the cover (34; 92, 94; 180) around the interruption (80).

11. An amphibious vehicle (2) according to claim 10 wherein the overlap comprises several tabs (104).

12. An amphibious vehicle (2) according to any one of the preceding claims wherein flexible material is provided between the bottom (20) of the vehicle (2) and the cover (34; 92, 94; 180) at the inboard end of the cover (34; 92, 94; 180)

13. An amphibious vehicle (2) according to any one of the preceding claims wherein the cover (34; 92, 94; 180) has a drain (35) therethrough.

14. An amphibious vehicle (2) according to any of the above claims, where the cover (34; 92, 94; 180) is formed as a buoyant body.

15. An amphibious vehicle (2) according to claim 14, where the cover (34; 92, 94; 180) is formed as a hollow body.

## Patentansprüche

1. Amphiblenfahrzeug (2), welches einziehbare Straßenräder (8) aufweist, von welchen jedes mittels einer Radaufhängung an einem Fahrzeugkörper (14, 16) montiert ist, wobei der Körper (14, 16) einen Gleitboden (20) aufweist, wobei der Boden (20) für Jede Aufhängung eine im Boden (20) vorgesehene Lücke (80) aufweist, durch welche sich wenigstens ein Teil der Aufhängung während des Einziehens oder Herausschlebens ihres Straßenrads (8) bewegen kann,
**dadurch gekennzeichnet, dass** die Lücke (80) derart angeordnet ist, dass sie von einer an den Teil der Radaufhängung geklammerten oder mit dieser verbundenen Abdeckung (34; 92, 94; 180) im Wesentlichen bedeckt wird, wobei die Abdeckung (34; 92, 94; 180) derart angeordnet ist, dass sich die Abdeckung (34; 92, 94; 180) beim Herausschleben des Rads wenigstens teilweise öffnet, und wobei sich das Straßenrad (8) im herausgeschobenen und eingezogenen Zustand außerhalb der Abdeckung (34; 92, 94; 180) befindet.

2. Amphibienfahrzeug (2) gemäß Anspruch 1, bei welchem die Abdeckung (34; 92, 94; 180) derart an der Aufhängung befestigt ist, dass sie um eine zur Längsachse des Fahrzeugs parallel verlaufende Achse wenigstens teilweise drehbar ist.

3. Amphibienfahrzeug (2) gemäß Anspruch 1 oder 2, bei welchem die Aufhängung ein oberes Aufhängungsglied (56) und ein unteres Aufhängungsglied (40) aufweist, die derart am Körper (14, 16) befestigt sind, dass sie eine Bewegung der Aufhängung um eine zur Längsachse des Fahrzeugs parallel verlaufende Achse zulassen.

4. Amphibienfahrzeug (2) gemäß einem der vorstehenden Ansprüche, bei welchem die Abdeckung (34; 92, 94; 180) an ein unteres Aufhängungsglied (40) geklammert ist.

5. Amphibienfahrzeug (2) gemäß einem der vorstehenden Ansprüche, bei welchem die Straßenräder (8) derart angeordnet sind, dass sie von einer ersten Position, in welcher sie auf der Straße verwendbar sind, in eine zweite Position angehoben werden, in welcher sie sich über der Wasserlinie des Fahrzeugs (2) befinden.

6. Amphibienfahrzeug (2) gemäß Anspruch 5, bei welchem der in den Boden (20) des Fahrzeugs (2) einziehbare Teil der Aufhängung ein unteres Aufhängungsglied (40) ist, welches sich wenigstens hauptsächlich in Querrichtung des Fahrzeugs (2) erstreckt.

7. Amphibienfahrzeug (2) gemäß Anspruch 5 oder 6, bei welchem die Befestigung der Abdeckung (34; 92, 94; 180) an dem Körper (14, 16) des Fahrzeugs (2) mittels eines Scharniers oder mittels Scharnieren (96, 98, 100, 102) angelenkt ist, wobei die Scharnierachsen zur Querachse des Fahrzeugs parallel verlaufen.

8. Amphibienfahrzeug (2) gemäß einem der Ansprüche 5 bis 7, bei welchem die Abdeckung (34; 92, 94; 180) mit dem Körper (14, 16) mittels eines Gestänges (182) bewegbar verbunden ist.

9. Amphibienfahrzeug (2) gemäß einem der Ansprüche 5 bis 8, bei welchem die Abdeckung (34; 92, 94; 180) mit dem Körper (14, 16) mittels einer dehnbaren Federverbindung (110, 112; 192) verbunden ist und sie mittels von der Abdeckung (34; 92, 94; 180) vorspringenden Klappen (104), die sich beim Einziehen der Aufhängung gegen dem Rumpf (16) anlegen, eingespannt ist, um nicht in den Rumpf (18) einzutreten.

10. Amphibienfahrzeug (2) gemäß einem der Ansprüche 1 bis 9, bei welchem die Abdeckung (34; 92, 94; 180) eingespannt ist, um sie mittels einer um die Lücke (80) herum verlaufenden Überlappung des Bodens (20) oder mittels einer um die Lücke (80) herum verlaufenden Überlappung der Abdeckung (34; 92, 94; 180) daran zu hindern, sich durch die Lücke (80) in den Rumpf (16) zu bewegen.

11. Amphibienfahrzeug (2) gemäß Anspruch 10, bei welchem die Überlappung mehrere Klappen (104) umfasst.

12. Amphibienfahrzeug (2) gemäß einem der vorstehenden Ansprüche, bei welchem zwischen dem Boden (20) des Fahrzeugs (2) und der Abdeckung (34; 92, 94; 180) an einem inneren Ende der Abdeckung (34; 92, 94; 180) ein biegsames Material vorgesehen ist.

13. Amphibienfahrzeug (2) gemäß einem der vorstehenden Ansprüche, bei welchem die Abdeckung (34; 92, 94; 180) durch sich hindurch einen Abfluss (35) aufweist.

14. Amphibienfahrzeug (2) gemäß einem der vorstehenden Ansprüche, bei welchem die Abdeckung (34; 92, 94; 180) als Schwimmkörper ausgebildet ist.

15. Amphibienfahrzeug (2) gemäß Anspruch 14, bei welchem die Abdeckung (34; 82, 94; 180) als Hohlkörper ausgebildet ist.

## Revendications

1. Véhicule amphibie (2) ayant des roues pour route (8) rétractables, chacune étant montée au moyen d'une suspension de roue sur une carrosserie de véhicule (14, 16), la carrosserie (14, 16) ayant un fond d'hydroplanage (20), dans lequel le fond (20) comporte, pour chaque suspension, une interruption (80) dans le fond via laquelle au moins une partie de la suspension peut se déplacer durant la rétraction ou le déploiement de sa dite roue de route (8), **caractérisé en ce que** l'interruption (80) est agencée pour être sensiblement recouverte par un cache (34 ; 92, 94 ; 180) articulé sur ou relié à la partie de la suspension de roue, le cache (34 ; 92, 94 ; 180) étant agencé de manière que le cache (34 ; 92, 94 ; 180) s'ouvre au moins en partie lors du déploiement de roue et dans lequel la dite roue de route (8) est extérieure par rapport au cache (34 ; 92, 94 ; 180) lorsque déployée et lorsque rétractée.

2. Véhicule amphibie (2) selon la revendication 1, dans lequel le cache (34 ; 92, 94 ; 180) est fixé à la suspension de manière à être au moins en partie rotatif autour d'un axe parallèle à l'axe longitudinal du véhicule.

3. Véhicule amphibie (2) selon la revendication 1 ou 2, dans lequel la suspension comporte un élément de suspension supérieur (56) et un élément de suspension inférieur (40) fixés à la carrosserie (14, 16) afin de pouvoir permettre le mouvement de la suspension autour d'un axe parallèle à l'axe longitudinal du véhicule.

4. Véhicule amphibie (2) selon l'une quelconque des revendications ci-dessus, dans lequel le cache (34 ; 92, 94 ; 180) est articulé sur un élément de suspension inférieur (40).

5. Véhicule amphibie (2) selon l'une quelconque des revendications ci-dessus, dans lequel les roues pour route (8) sont agencées de manière à être levées d'une première position dans laquelle elles peuvent être utilisées sur route jusque dans une deuxième position dans laquelle elles se trouvent au-dessus de la ligne de flottaison du véhicule (2).

6. Véhicule amphibie (2) selon la revendication 5, dans lequel la partie de la suspension qui est rétractable dans le fond (20) du véhicule (2) est un élément de suspension inférieur (40) qui s'étend, au moins principalement, dans une direction transversale du véhicule (2).

7. Véhicule amphibie (2) selon la revendication 5 ou 6, dans lequel la fixation du cache (34 ; 92, 94 ; 180) à la carrosserie (14, 16) du véhicule (2) est articulée au moyen d'une articulation ou d'articulations (96, 98, 100, 102), les axes des articulations étant parallèles à l'axe transversal du véhicule.

8. Véhicule amphibie (2) selon l'une quelconque des revendications 5 à 7, dans lequel le cache (34 ; 92, 94 ; 180) est relié, de manière amovible, à la carrosserie (14, 16) du véhicule (2) par un embiellage (182).

9. Véhicule amphibie (2) selon l'une quelconque des revendications 5 à 8, dans lequel le cache (34 ; 92, 94 ; 180) est relié à la carrosserie (14, 16) par une connexion à ressort extensible (110, 112 ; 192), et contraint de ne pas passer au sein de la coque (16) par des pattes (104) faisant saillie depuis ledit cache (34 ; 92, 94 ; 180), qui butent contre la coque (16) tandis que la suspension est rétractée.

10. Véhicule amphibie (2) selon l'une quelconque des revendications 1 à 9, dans lequel le cache (34 ; 92, 94 ; 180) est contraint de ne pas pouvoir passer via l'interruption (80) dans la coque (16) par un chevauchement du fond (20) autour de l'interruption (80) ou par un chevauchement du cache (34 ; 92, 94 ; 180) autour de l'interruption (80).

11. Véhicule amphibie (2) selon la revendication 10, dans lequel le chevauchement comprend plusieurs pattes (104).

12. Véhicule amphibie (2) selon l'une quelconque des revendications précédentes, dans lequel un matériau flexible est prévu entre le fond (20) du véhicule (2) et le cache (34 ; 92, 94 ; 180) à l'extrémité intérieure du cache (34 ; 92, 94 ; 180).

13. Véhicule amphibie (2) selon l'une quelconque des revendications précédentes, dans lequel le cache (34 ; 92, 94 ; 180) comporte une évacuation (35) le traversant.

14. Véhicule amphibie (2) selon l'une quelconque des revendications ci-dessus, dans lequel le cache (34 ; 92, 94 ; 180) est formé en tant que corps flottant.

15. véhicule amphibie (2) selon la revendication 14, dans lequel le cache (34 ; 92, 94 ; 180) est formé en tant que corps creux.
